(19) Europäisches Patentamt
European Patent Office
Office européen des brevets

(11) **EP 1 760 441 B1**

## (12) EUROPÄISCHE PATENTSCHRIFT

(45) Veröffentlichungstag und Bekanntmachung des Hinweises auf die Patenterteilung:
**17.12.2008 Patentblatt 2008/51**

(51) Int Cl.:
**G01K 17/20** *(2006.01)* **G01K 7/02** *(2006.01)*

(21) Anmeldenummer: **06017393.7**

(22) Anmeldetag: **22.08.2006**

(54) **Vorrichtung und ein entsprechendes Verfahren zur Erfassung des spezifischen Wärmeflusses auf eine Membranwand zur Optimierung der Kesselauslegung und des Kesselbetriebes**

Device and an associated method for capturing the specific heat flow on a membrane wall in order to otpimize the operation of a boiler.

Appareil et méthode associée pour la détection du flux thermique specifique dans une paroi de membrane pour optimiser du fonctionnement de la chaudière.

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.08.2005 DE 102005040277**

(43) Veröffentlichungstag der Anmeldung:
**07.03.2007 Patentblatt 2007/10**

(73) Patentinhaber: **CheMin GmbH**
**86167 Augsburg (DE)**

(72) Erfinder:
• **Krüger, Jörg, Dr.**
**92421 Schwandorf (DE)**
• **Spiegel, Wolfgang, Dr.**
**86415 Mering (DE)**

• **Beckmann, Michael, Prof. Dr.**
**99425 Weimar (DE)**
• **Krüger, Sascha, Dipl.-Ing.**
**92421 Schwandorf (DE)**

(74) Vertreter: **Müller-Wolff, Thomas**
**Patentanwalt,**
**Postfach 19 02 17**
**53037 Bonn (DE)**

(56) Entgegenhaltungen:
**WO-A2-20/04036116        US-A- 4 779 994**
**US-B1- 6 485 174**

• **"INTEGRAL PLUG-TYPE HEAT-FLUX GAUGE" NTIS TECH NOTES, US DEPARTMENT OF COMMERCE. SPRINGFIELD, VA, US, Januar 1992 (1992-01), Seiten 34,1-2, XP000287850 ISSN: 0889-8464**

## Beschreibung

Die Erfindung betrifft ein Verfahren und eine Vorrichtung zur Auslegung und Prüfung eines auf einen Bereich von Wärmeübertragungsflächen bezogenen Wärmeflusses gemäß Oberbegriff der Ansprüche 1 und 5.

Aus WO-A2-2004/036116 und US-A-6485174 sind Membranwand-WärmeflussSensoren mit jeweils zwei Messstellen zur Differenzbildung der Temperaturen bekannt. An jeder Messstelle befindet sich ein Thermoelement herkömmlicher Bauart, bestehend aus jeweils einem Thermoelementpaar. Die bei der Ermittlung des Wärmeflusses aus einzelnen gemessenen Temperaturen auftretenden Fehler können insbesondere bei geringen Temperaturdifferenzen zu einem hohen' Gesamtfehler in der Wärmeflussberechnung führen.

Auch aus US 4779994 ist eine Wärmeflusseinrichtung bekannt, die mit herkömmlichen Thermoelementen arbeitet. Zusätzlich werden hier elektrische Isolations- und Schutzschichten benötigt, die die Gefahr von Messfehlern vergrößern und insbesondere bei der Kesselauslegung von Dampferzeugern wegen des hohen Temperatureinsatzbereiches nicht verwendbar sind.

In Dampferzeugern wird die Energie aus den Verbrennungsgasen im hohen Temperaturbereich im Wesentlichen durch Flamm- sowie Gasstrahlung und im abgesenkten Temperaturbereich im Wesentlichen durch Konvektion auf das Wasser bzw. den Dampf übertragen. Die Gestaltung der Wärmeübertragungsflächen trägt den physikalischen Gesetzen Rechnung. In dem hohen Temperaturbereich sind Rauchgaszüge ohne Einbauten - die so genannten Leer- oder Strahlungszüge - üblich. In den unteren Rauchgastemperaturbereichen werden die Kesselzüge mit Rohren ausgestattet, die einen guten konvektiven Wärmeübergang aus dem Rauchgas auf das zu beheizende Medium sicherstellen. Die rauchgasbegrenzenden Wände aller Kesselzüge werden in den meisten Fällen aus Membranwänden gebildet. Diese Membranwände bestehen aus mittels Stegen (4) untereinander verschweißten Rohren (3). Sie bilden eine dichte Abdichtung für die Rauchgase und werden im Allgemeinen durch das Siedewasser in den Rohren gekühlt.

Aus verfahrens- und materialtechnischen Gründen muss in Teilbereichen der Strahlungszüge der Wärmefluss auf die Membranwände verringert werden. Dies geschieht durch Feuerfestzustellungen - Materialien also, die entsprechend der chemischen und thermischen Belastungen ausgewählt und auf den Membranwänden auf vielfältige Art und Weise befestigt werden.

Die Rauchgase kühlen sich von den adiabaten Verbrennungstemperaturen in den Strahlungszügen bis auf die geeignete Eintrittstemperatur in den konvektiven Bereich ab. Die geeignete Rauchgaseintrittstemperatur in den konvektiven Bereich ergibt sich aus den Eigenschaften des eingesetzten Brennstoffes und den angestrebten Dampftemperaturen. Bei Müllverbrennungsanlagen liegt diese geeignete Rauchgaseintrittstemperatur häufig im Bereich zwischen 500 und 600 °C.

Die Begleitstoffe der Brennstoffe, seien es Chlor, Schwefel, Schwermetalle, Alkalien, Erdalkalien und andere Mineralien, bilden in Abhängigkeit von den Verbrennungstemperaturen gas- und dampfförmige Verbindungen, die sowohl in der Gasphase als auch bei der Abkühlung in der kondensierten Phase die eingesetzten Kesselwerkstoffe über verschiedene Komosionsmechanismen angreifen. Zusätzlich werden auch die inerten Stäube über diese kondensierenden Verbindungen eingebunden und bilden Beläge. Diese Beläge behindern sowohl in den Strahlungszügen als auch in den konvektiven Zügen den Wärmeübergang vom Rauchgas auf die Heizflächen. In den konvektiven Zügen wird durch die Beläge zusätzlich der freie Abzug der Rauchgase behindert.

Bei der Auslegung der Heizflächen strebt man an, dass die Rauchgase in den Strahlungszügen soweit abgekühlt werden, dass die Kondensation der gas- bzw. dampfförmigen Bestandteile vor dem Eintritt In den konvektiven Zug weitgehend abgeschlossen und die Aggressivität der gasförmigen Anteile abgesenkt ist. Insbesondere zu Beginn der Reisezeit - bei belagfreien Heizflächen - und ggf. bei Teillast muss die Rauchgastemperatur vor dem Eintritt in den konvektiven Zug jedoch noch so hoch sein, dass eine ausreichende Überhitzung des Dampfes sichergestellt wird.

Zudem sind über möglichst hohe treibende Temperaturdifferenzen und Wärmeübergänge zwischen dem Rauchgas und dem zu beheizenden Medium die Heizflächen und damit die Herstellungskosten zu minimieren. Die zur Verfügung stehenden Berechnungsmethoden gestatten grundsätzlich eine solche Auslegung.

## Aufgabe der Erfindung

Die Eigenschaften der Brennstoffe diffuser Quellen und damit das Verhalten der Rauchgase sind leider nicht immer genau vorauszusagen. Es ist zu verhindern, dass die angestrebten Rauchgastemperaturen vor dem Eintritt in den konvektiven Strahlungszug durch starke Belegung der Heizflächen weit überschritten werden. Bei bekannter Rauchgasmenge und -zusammensetzung kann über Temperaturmessungen der Rauchgastemperaturen die Abnahme des Wärmeinhalts der Rauchgase bestimmt werden. Durch Bezug auf die Heizfläche kann somit bisher der mittlere spezifische Wärmefluss auf die zugehörigen Heizflächen ermittelt werden.

Auf Grund dieses Ergebnisses kann man leider über Messung von Rauchgastemperaturen nicht erkennen, in welchen Bereichen der Strahlungszüge die Beläge oder andere Einflüsse den Wärmeübergang so stark behindern, dass die Anlage mit einem Online Reinigungsverfahren gereinigt oder zur Reinigung abgefahren werden muss. Es ist besonders bei der Online Reinigung von Vorteil, wenn der belegte Bereich durch ein Messverfahren bekannt ist. Neben den Belägen ist der Feuerfestzustellung (11) Beachtung zu schenken. Diese schützenden Feuerfestzustellungen (11) haben. Standzeiten zwischen einem Jahr und fünf Jahren. Die Feuerfestzustellung wird mittels Spritzverfahren unter Zugabe von Wasser auf die Membranwand aufgebracht, abgezogen und bindet anschließend ab. Bekannt sind auch manuell gestampfte Massen. Die Schichtdicke solcher aufgebrachten Massen liegt im Bereich von 25mm bis 30mm. Die vorgenannten Arten der Feuerfestzustellung werden in zunehmendem Maße durch einfacher zu montierende Kacheln auf SiC (Siliciumcarbid)-Basis ersetzt, die wahlweise hinterlüftet oder hintergossen mit einem speziellen Mörtel auf der Membranwand befestigt werden. Mit dem Erreichen ihrer Lebensdauer können die Feuerfestzustellungen in größeren Segmenten schlagartig abfallen oder einen Rauchgasspalt zwischen sich und der Membranwand ausbilden. Beides ist für das Verfahren nachteilig und kann zukünftig erfindungsgemäß sehr früh erkannt werden. In dem Spalt kommt es zu starken Korrosionen der Membranwand und der Wärmefluss wird durch den zusätzlichen Wärmewiderstand des Rauchgasspaltes behindert. Bei Verlust der Zustellung ist der Wärmefluss höher als geplant und die aggressiven Rauchgase haben direkten Kontakt zu den metallischen Werkstoffen.

Zusätzlich zu den hier beschriebenen Mechanismen gibt es Bereiche in den Kesseln, in denen man für die Auslegung - beispielsweise zur Einhaltung der Mindestverbrennungsbedingungen in Müllverbrennungsanlagen - wissen muss, wie hoch der Wärmefluss in bestimmten Kesselbereichen ist. In diesem Zusammenhang sind bei Müllverbrennungsanlagen besonders der Aufgabebereich des Mülls auf den Rost und der dortige Zündbereich zu nennen. Dort ist im Normalfall eine starke Flamme mit hoher Wärmestrahlung zu beobachten. Es ist jedoch nicht zu ermitteln, ob infolge von Sauerstoffmangel oder optimaler Sauerstoffkonzentration hinter oder innerhalb der Flamme die gleiche, eine höhere oder tiefere Wärmestrahlung auf die Kesselwände einwirkt.

Grundsätzlich kann der Wärmefluss mit einem aufwendigen Verfahren durch die Membranwand punktuell mittels Messung von Temperaturdifferenzen an einer Schicht mit bekanntem Wärmewiderstand bestimmt werden. Die Firma Clyde Bergemann vertreibt ein solches Gerät unter dem Namen Smart Flux™ Sensor CBW01.

Da der Wärmefluss bei diesem Verfahren auf die Membranwände von der Rauchgasseite und damit der aggressiv belasteten Seite zu messen ist, muss diese grundsätzlich einfache Messung erheblichen Belastungen standhalten. Zum einen sind die elektrischen Isolationen so zu wählen, dass sie bei den vorliegenden Temperaturen funktionsfähig bleiben. Zum anderen ist die gesamte Vorrichtung gegen die korrosiven und mechanischen Belastungen bei Betrieb und Revisionen zu schützen. Zu den höchsten Belastungen dürfte die Erneuerung der Feuerfestzustellung gehören. Die verbrauchte Feuerfestzustellung wird üblicherweise mit Drucklufthämmern und/oder durch Sandstrahlen entfernt. Eine weitere Schwierigkeit dürfte die Platzierung der beschriebenen Vorrichtung sein. Da die Membranwand eine vergleichsweise komplexe Form hat, durch die der Wärmefluss nicht unbedingt senkrecht zur Oberfläche in die Wand eintritt und die abgewickelte Oberfläche ca. 1,4-fach höher als die projizierte Oberfläche ist, ist eine repräsentative Position der Wärmestrommessung sehr schwierig zu ermitteln.

Aufgabe der vorliegenden Erfindung ist es daher, die beschriebenen Nachteile zu vermeiden und ein Verfahren zur Auslegung und Prüfung eines auf einen Bereich von Wärmeübertragungsflächen bezogenen Wärmeflusses in Wandbereichen von Heizkraftwerken sowie eine entsprechend einsetzbare Vorrichtung anzubieten, die auch bei geringen Messbereichen von bis zu 10° mit hoher Genauigkeit von unter 1% arbeitet und die insbesondere auch an vergleichsweise komplex geformten Membranwänden einsetzbar ist.

Die Aufgabe wird erfindungsgemäß durch die in den Patentansprüchen 1, 5 und 6 angegebenen Merkmale gelöst.

Im Folgenden wird die Erfindung anhand mehrerer Ausführungsbeispiele näher erläutert.

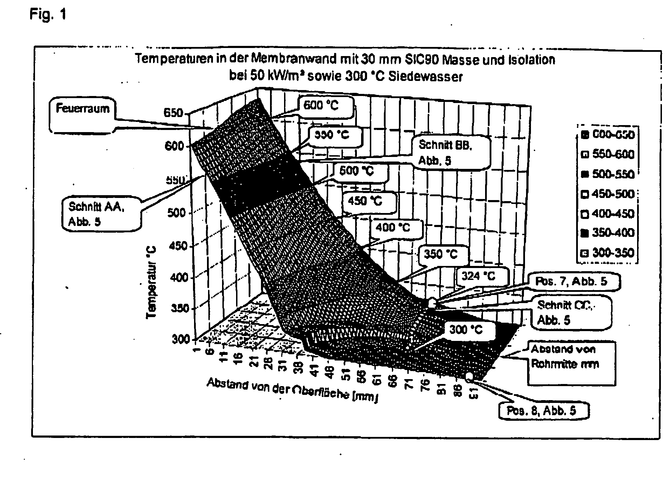

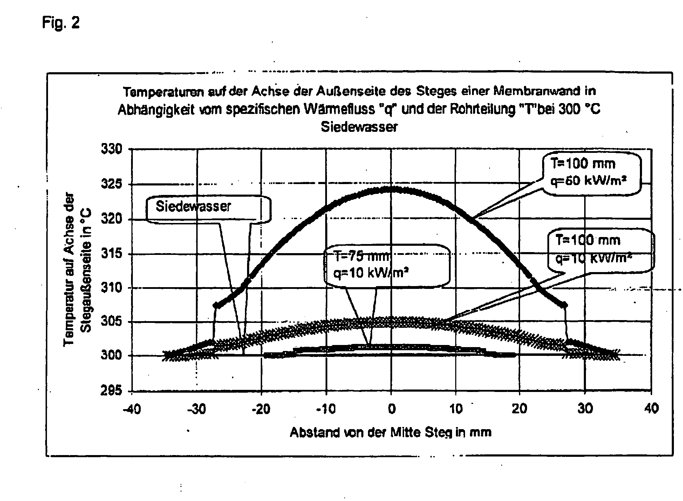

Die Berechnung lokaler Temperaturen nach der Methode der finiten Elemente unter Berücksichtigung der Eigenschaften von Membranwandmaterial, Rohrabstand, Material der Feuerfestzustellung und ihrer Schichtdicke erlaubt die Abschätzung der später vorliegenden Bedingungen bei optimaler Verbrennung. Die Erfindung wird im Folgenden an einem einfachen und weit verbreiteten Membranwandaufbau mit einer nicht segmentierten Feuerfestzustellung erläutert. Bei der Berechnung von Temperaturen in Membranwänden nach der Methode der finiten Elemente wurde beobachtet, dass die Temperatur im Steg infolge des Wärmeflusses und der Wärmewiderstände höher ist als die des Rohres (Abbildung 1). Genauere Untersuchungen haben gezeigt, dass zwischen der Temperaturdifferenz Mitte Steg zum rauchgasabgewandten Scheitel des Rohres und dem spezifischen Wärmefluss ein proportionaler Zusammenhang besteht (Abbildung 2). Bei sehr geringen Wärmeverlusten durch die Isolation (5) ist die dem Rauchgas abgewandte Scheiteltemperatur des Rohres annähernd gleich der des Siedewassers.

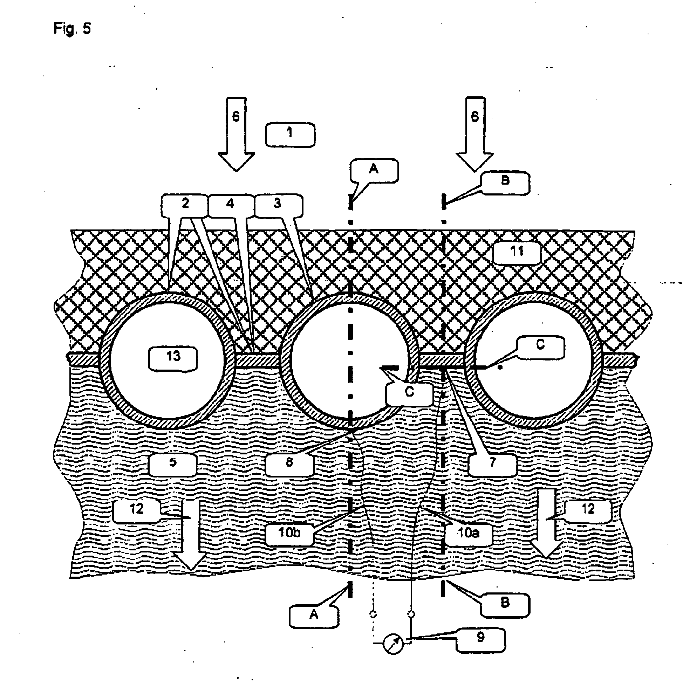

Die Abbildung 1 zeigt in einer 3-dimensionalen Ansicht die Materialtemperaturen in einem Ausschnitt einer typischen Membranwand gemäß Schnitt AA und BB in Abbildung 5. Die Berechnungen nach der Methode der finiten Elemente wurden für eine Membranwand mit einer Teilung (der Abstand der Rohre) von 100 mm, einer thermischen Belastung von 50 kW/m$^2$ bei einer Siedewassertemperatur von 300 °C durchgeführt. Zusätzlich wurde in der Berechnung berücksichtigt, dass die Membranwand mit einer gut wärmeleitenden Feuerfestzustellung (S1C90 Masse) geschützt ist, die eine Höhe von 30 mm über dem Scheitel der Rohre hat. Durch die unterschiedliche Wärmeleitfähigkeit der einzelnen Komponenten - Feuerfestzustellung, Stahl und Wasser -, den Wärmeübergang vom Rohr auf das Wasser und die unterschiedlichen Wärmeflüsse lassen sich die Materialtemperaturen in der Kontur gut erkennen.

In dieser dreidimensionalen Darstellung sind zusätzlich die Messpunkte 7 und 8 sowie die Schnittlinie CC der Abbildung 5 eingetragen.

Das Diagramm in der Abbildung 2 zeigt den Temperaturverlauf auf einer Schnittlinie CC der Abbildungen 1 und 5, die auf der rauchgasabgewandten Seite des Steges (4) parallel zu dem Steg (4) bis in das Siedewasser (13) verläuft. Das auffällige symmetrische Temperaturprofil entsteht dadurch, dass die auf dem Steg (4) auftreffende Wärme in Richtung auf die Rohre (3) abfließt. Das Maximum der Temperatur liegt in der Mitte des Steges. Die experimentell bestätigten Temperaturverläufe wurden aus Berechnungen nach der "Methode der finiten Elemente" entsprechend der Abbildung 1 entnommen. In der Abbildung 2 werden zusätzlich Berechnungsergebnisse für geänderte Parameter dargestellt. Für die Parametervariation wurden die Teilung von 100 mm auf 75 mm und der Wärmefluss von 50 kW/m$^2$ auf 10 kW/m$^2$ variiert. Die Temperaturdifferenz von der Mitte der rauchgasabgewandten Seite des Steges zum Siedewasser fällt von 324 °C - 300 °C = 24 °C auf 304,8 °C - 300 °C = 4,8 °C linear um den Faktor 5 ab, dies bei einem Abfall des Wärmeflusses von 50 kW/m$^2$ auf 10 kW/m$^2$. Über die (rechnerische) Bestimmung dieses proportionalen Zusammenhangs kann man über die kontinuierliche Messung der Differenztemperaturen kontinuierlich den spezifischen Wärmefluss ermitteln (Gleichungen 1 - 4).

Die Abbildung 2 zeigt zugleich, dass die maximale Temperatur auf der rauchgasabgewandten Seite des Steges mit dem Abfall der Teilung von 100 mm auf 75 mm deutlich von 304,8 auf 301,2 °C fällt. Dies lässt sich damit erklären, dass auf den kürzeren Steg weniger Wärme auftrifft und der Wärmewiderstand mit dem kürzeren Steg kleiner ist. Bei der Bestimmung des Proportionalitätsfaktors ist daher insbesondere die Teilung der Membranwand zu berücksichtigen.

Mit Hilfe dieses erfindungsgemäßen Verfahrens kann der Wärmefluss von der äußeren geschützten Seite der Membranwand annähernd an jeder Stelle der Membranwand über die Bestimmung der Temperaturdifferenz und den oben genannten proportionalen Zusammenhang bestimmt werden. Es ist möglich, wichtige Daten für die Auslegung des Kessels, über den Zustand der Feuerfestzustellung sowie der Beläge zu gewinnen. Man kann damit entscheiden, in welchen Bereichen der Kessel mit der Online Reinigung gereinigt werden muss. Es können Erkenntnisse gesammelt werden, welche Besonderheiten bei der Verbrennung von spezifischen Abfällen auftreten und welche Einstellungen dazu führen, dass die Belegung der Heizflächen weniger stark ausgeprägt ist. Dieses erfindungsgemäße Verfahren lässt durch diese Informationen eine bessere Kesselsteuerung zu.

Diese oben beschriebene Temperaturdifferenz, die häufig bei Materialtemperaturen (Siedewassertemperaturen) zwischen 250 bis 300 °C nur wenige Grad bis annähernd 100 °C betragen kann, kann grundsätzlich mit zwei Thermoelementen oder Widerstandstemperaturmessungen bestimmt werden.

Ein Thermoelement ist ein Bauteil aus zwei verschiedenen Metallen, welches sich des Seebeck-Effektes bedient, um eine Spannung zu erzeugen. Diese kann zum Beispiel genutzt werden, um Temperaturen zu messen. Der Seebeck-Effekt besagt, dass zwei Metalle, die miteinander verbunden werden, an ihren Grenzschichten eine thermoelektrische Spannung entstehen lassen. Diese Spannung ist temperaturabhängig und bewegt sich in einem Bereich von wenigen Mikrovolt. Mit Hilfe der so genannten thermoelektrischen Spannungsreihe (vgl. DIN EN 60584) kann eine Aussage über die Temperatur an der Messstelle gemacht werden. Jedes Metall besitzt einen thermoelektrischen Koeffizienten, der meist gegen Platin angegeben wird. Eine einfache Gleichung ist für die Praxis vollkommen ausreichend:

$$U_{th\,1} = (k_{Fe} - k_{CuNi}) \cdot T_{Mess\,1} \qquad \text{(Gl. 1)}$$

Im Folgenden wird von einem Thermoelement des Typs J ausgegangen. Der positive Thermodraht ist handelsübliches, reines Eisen (99,95% Fe), das üblicherweise bedeutende Mengen von Verunreinigungen an Kohlenstoff, Chrom, Kupfer, Mangan, Nickel, Phosphor, Silizium und Schwefel enthält. Der negative Thermodraht ist eine Kupfer-Nickel-Legierung, die häufig als Konstantan bezeichnet wird. Beide Urähte, die üblicherweise elektrisch isoliert in Schutzrohren oder Schutzhülsen, an die zu messende Stelle geführt werden, bilden das Thermoelement.

$$U_{th\,1} = (k_{Fe} - k_{CuNi}) \cdot T_{Mess\,1} \qquad \text{(Gl. 1)}$$

$$U_{th\,2} = (k_{Fe} - k_{CuNi}) \cdot T_{Mess\,2} \qquad \text{(Gl. 2)}$$

$$U_{th\,2\text{-}1} = (k_{Fe} - k_{CuNi}) \cdot (T_{Mess\,2} - T_{Mess\,1}) \qquad \text{(Gl. 3)}$$

Die Gleichungen 1 bis 3 beschreiben die Bildung der Thermospannung aus den Messstellen der Temperaturen 1 und 2, wobei kCuNi und kFe die thermoelektrischen Koeffizienten der Legierung CuNi und Fe darstellen und $T_{Mess1}$ sowie $T_{Mess\,2}$ die Temperatur an der zugehörigen Messstelle ist.

Um den spezifischen Wärmefluss auf eine Membranwand zu ermitteln, benötigt man somit die Differenztemperatur von zwei repräsentativen Messstellen (Gl. 4)

$$T_{Mess1} - T_{Mess2}\ [°C] = \Delta T\ [°C] = \sim \Delta \dot{U}\ [V] = \sim \dot{q}\ [W/m^2] \qquad \text{(Gl. 4)}$$

Bei der praktischen Ausführung von zwei Messungen und der Differenzbildung der Ergebnisse kann es infolge der nach DIN zulässigen Fehler - für die beabsichtigte Messung - zur Verdoppelung der Messfehlers kommen. Der ASTM Standard E230-87 in der Ausgabe 1992 des ASTM Jahrbuches gibt die Toleranzen der Grundwertreihe für Thermopaare Typ J (Eisen Konstantan) mit $\pm$ 2,2 °C oder $\pm$ 0,75% (es gilt jeweils der größere der beiden Werte) zwischen 0 °C und 750 °C an. Thermopaare des Typs J können auch mit speziellen Toleranzen von $\pm$1,1 °C oder $\pm$0,4% geliefert werden. Auch bei hoher Genauigkeit sind die möglichen Fehler bei 300 °C mit $\pm$ 1,1 bzw. $\pm$ 1,2 °C der einzelnen Thermoelemente beachtlich. Werden die Temperaturen von zwei Messstellen über Differenzbildung verglichen, sind Fehler von bis zu 2,2 °C zu erwarten. Weitere Fehler sind über die Befestigung der Thermoelemente, die in elektrisch isolierten Schutzrohren bzw. Hülsen geführt werden, an der Messstelle der Membranwand, nicht auszuschließen.

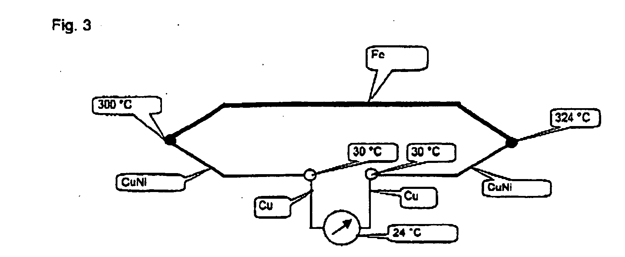

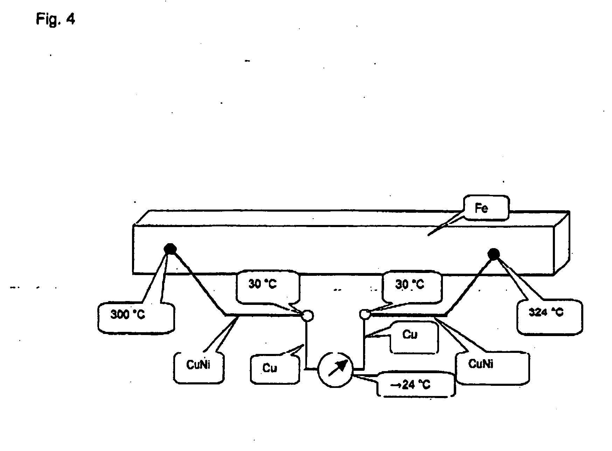

In den Abbildungen 3 und 4 werden das bekannte und das erfindungsgemäße Messverfahren gegenübergestellt. In der Abbildung 3 wird das übliche Messverfahren dargestellt In der Abbildung 4 wird gezeigt, wie das Grundmaterial erfindungsgemäß als Teil des Thermoelements genutzt wird. Für den Fall, dass das Grundmaterial nicht dem Eisen des Typs J entspricht, kann der thermoelektrische Effekt kFe über vergleichsmessungen bestimmt werden.

(Auch bei der Differenztemperaturmessung muss $k_{Fe}$ ggf. gemessen werden.)

Erfindungsgemäß wird daher vorgeschlagen, das Grundmaterial aus Rohren (3) und Stegen (4) der oben genannten - aus niedriglegiertem Stahl gefertigten - Mcmbranwand (2), für die beiden Thermoelemente als gemeinsames positives Grundmaterial zu wählen und für beide Thermoelemente jeweils nur einen Konstantandraht 10a und 10b an den Stellen mit dem Grundmaterial zu verbinden, an denen die Temperaturdifferenz bestimmt werden soll. Dieses Verfahren ist besonders einfach durchzuführen, weil die zwei negativen Konstantandrähte (10 a, 10 b) ohne Berücksichtigung von elektrischer Isolation zum Grundmaterial direkt auf diesem verschweißt werden können.

Bei der üblichen Differenzmessung mit zwei Temperaturmessungen mit einem jeweiligen Messbereich von 0 bis 300 °C kann sich im ungünstigen Fall der Messfehler zu 2,2 °C ergeben. Bei dieser Differenzmessung über zwei Temperaturmessungen mit separaten Thermoelementen und einem Messbereich von 0 - 10°C könnte unter ungunstigen Umständen ein Messfehler von 22 % resultieren.

Bei der gleichen Genauigkeit von 0,4 % und einem Messbereich der erfindungsgemäßen Differenzmessung von 0 - 10 °C ergibt sich für die erfindungsgemäße Differenzmessung ein Fehler von nur 0,04 °C. Hinzu kommt, dass bei der erfindungsgemäßen Differenzmessung 50 % des Thermodrahtmaterials und ein Messumformer eingespart werden.

Durch die erfindungsgemäße Differenzmessung in einem der maximalen Differenztemperatur und damit dem maximalen Wärmestrom angepassten Messbereich kann somit eine Messgenauigkeit von annähernd 0,4 % erreicht werden. Wird der Messbereich aus Sicherheitsgründen auf den doppelten Wert der erwarteten Differenztemperatur ausgelegt, ist der zu erwartende Messfehler noch unter 1%. Bei Abstellungen der Anlage kann der Nullpunkt kalibriert werden, da dann die Thermospannung 0 ist. Durch die Wahl des Grundmaterials als Teil der erfindungsgemäßen Differenzmessung entfallen alle Fehler, die üblicherweise durch Wärmeverluste von Befestigungselementen entstehen können.

Durch Reinigung der Membranwand vor dem Anfahren der Anlage kann bei vergleichbaren Betriebszuständen die Abnahme des Wärmeflusses durch die Belagbildung bestimmt werden. Werden zudem durch Online-Reinigung die Beläge während des Betriebes der Anlage entfernt, sind über die Messung des Wärmeflusses Optimierungen des Verbrennungsbetriebes möglich.

Die Positionen der Kontaktstellen werden gemäß theoretischen Abschätzungen über die zu erwartenden Wärmeflüsse und der gefährdeten Bereiche der Feuerfestzustellung gewählt. Langsame und stetige Abnahme der Differenztemperatur und damit des Wärmeflusses nach der Reinigung bei Stillständen oder der Online-Reinigung kennzeichnen die Ausbildung von Belägen. Schlagartige Abweichungen mit einem Anstieg des Wärmeflusses lassen auf Verlust von Feuerfestzustellungen schließen. Der Abfall des Wärmeflusses bei vergleichbaren Betriebszuständen nach einer Abreinigung der Beläge lässt auf Ablösen und Spaltbildung von Feuerfestzustellungen schließen.

In kritischen Bereichen kann mittels vertikal angeordneter Messstellen die Funktionalität der Feuertestzustellung überwacht werden. In diesem Zusammenhang ist der obere Abschluss der Zustellung in Rauchgasströmungsrichtung wichtig. Durch Kontaktpunkte vor und nach dem Abschluss der Stampfmasse kann weitgehend unabhängig von den Betriebszuständen erkannt werden, ob sich in der Zustellung Änderungen ergeben haben.

Das beschriebene Verfahren und die vorgeschlagenen Vorrichtungen sind grundsätzlich für alle Typen von Rost. Wirbelschicht, Staubbrenner und alternativ befeuerte Verbrennungskessel geeignet.

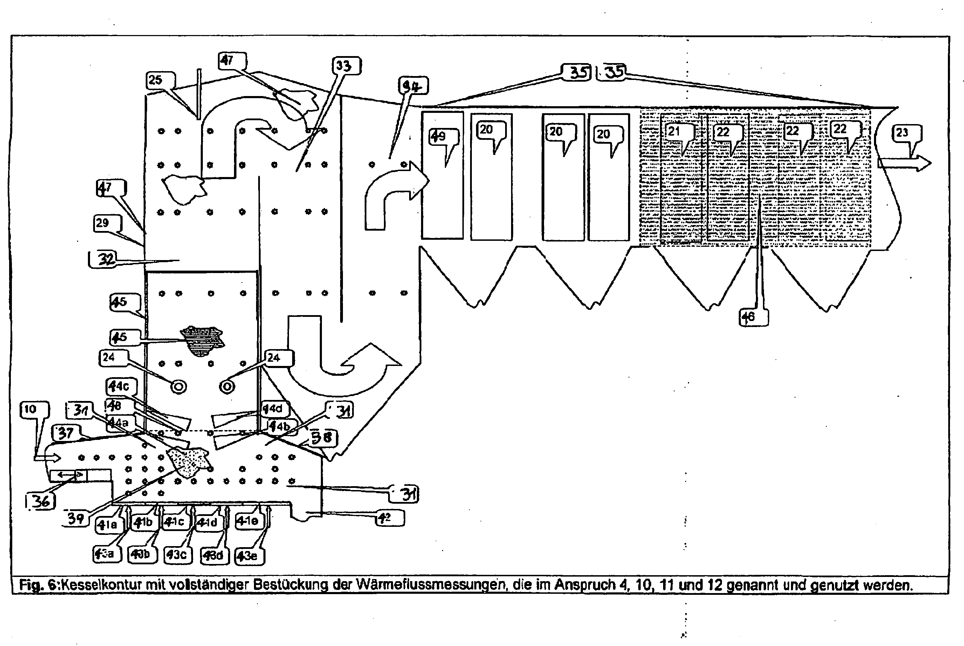

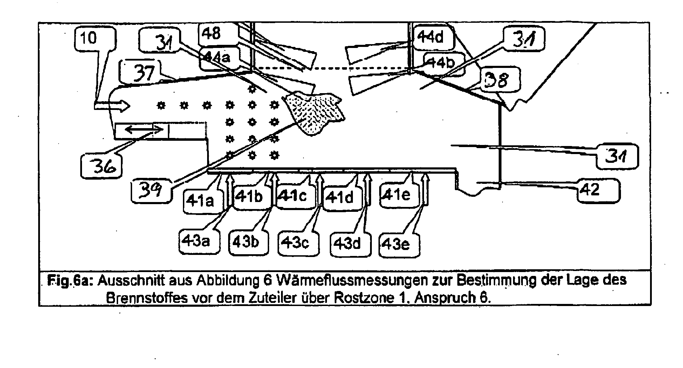

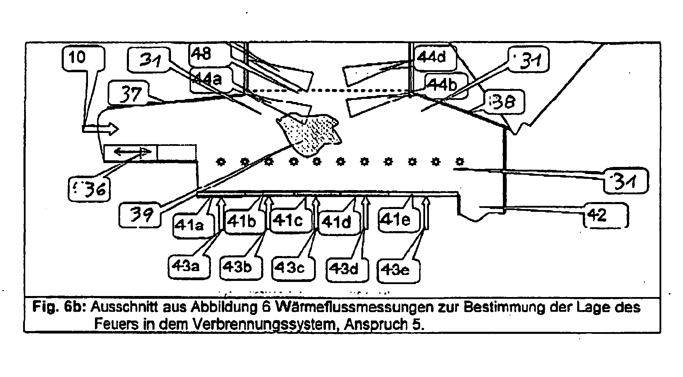

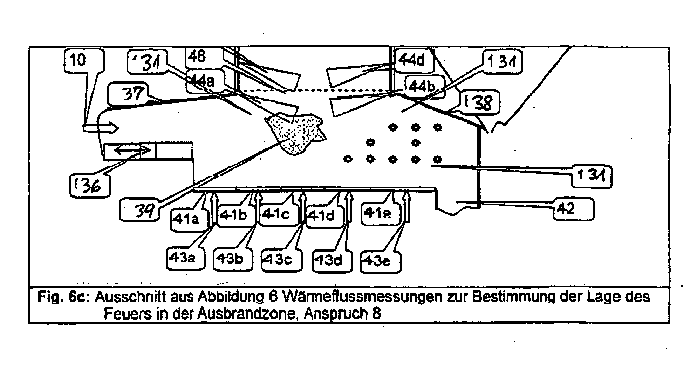

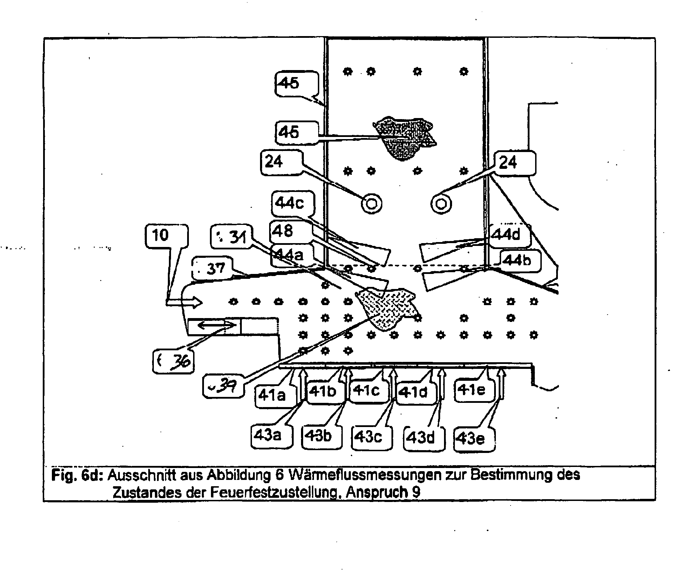

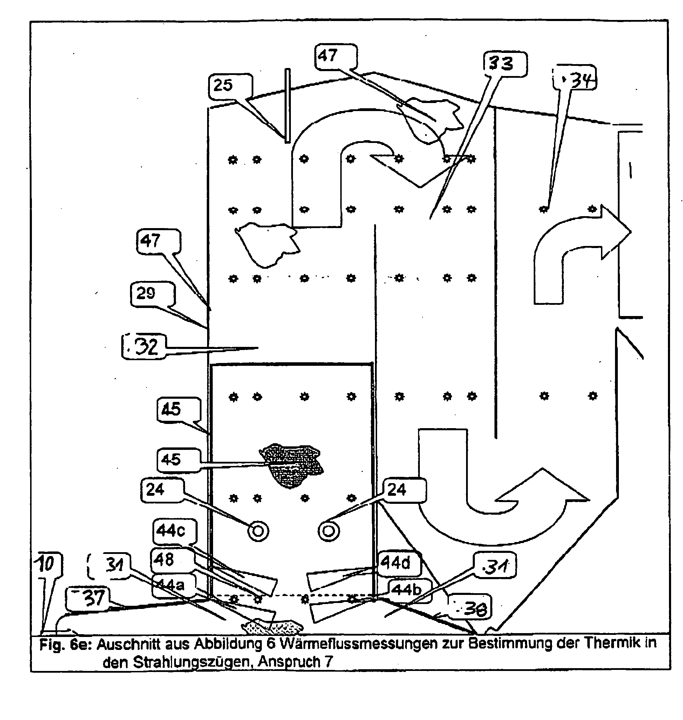

In der Figur 6 ist ein typischer Verbrennungskessel mit einem Feuerraum (31), dem ersten Strahlungszug (32), dem zweiten Strahlungszug (33) und dem dritten Strahlungszug (34) sowie einem konvektiven Zug (35) dargestellt. Der Feuerraum (31) ist im Wesentlichen begrenzt durch den Zuteiler (36), die Zünddecke (37), die Ausbranddecke (38), die Seitenwände des Feuerraums (39) und den Rost (41a-e). Die Brennstoffzufuhr erfolgt über die Müllzufuhr (40) und den Zuteiler (36). Die Verbrennung erfolgt auf dem Verbrennungsrost (41a-e), der in diesem Beispiel in 5 Rostzonen untergliedert ist, die einzeln oder gemeinsam angetrieben werden können Die ausgebrannte Schlacke fällt nach dem Rost (41) in den Schlackefalischacht (42) zum Entschlacker. Die Primärluft (43 a-e) wird getrennt durch die Rostzonen (41 a-e) zugeführt: Die Sekundärluft (44 a-d) dient der Vermischung und dem sichereren Ausbrand der Gase vor dem Eintritt in den ersten Strahlungszug (32). In modernen Anlagen wird die Sekundärluft auf der Stirn- und Ausbrandseite in 2 Ebenen eingedüst. Ober der Sekundärlufteindüsung (44 a-d) sind die Anfahr- und Stützbrenner (24) installiert.

Die Wände des ersten Strahlungszuges können zur Einhaltung der Mindestverbrennungsbedingungen und zum Schutz der Heizflächen gegen Korrosionen im unteren Bereich mit Feuerfestzustellung (45) zugestellt sein.

Die Membranwände (29) über der Feuerfestzustellung (45) im ersten Strahlungszug (32) und zum Teil im zweiten Strahlungszug (33) können mit einer Aufschwelßung aus Nickelbasislegierungen (47) gegen Korrosionen geschützt werden. Danach sind bei den üblichen Siedewassertemperaturen von 240 bis 320 °C und den abgesenkten Rauchgastemperaturen üblicherweise keine Korrosionsschutzmaßnahmen im unteren Teil des zweiten Zuges (33) und in dem dritten Zug (34) erforderlich.

Die Rauchgase kühlen sich üblicherweise vom Eintritt (48) in den ersten Zug (32) mit 1000 - 1300 °C bis zum Verlassen des dritten Zuges (34) auf 450 - 650 °C ab und treten mit diesen Temperaturen in den konvektiven Zug (35) ein. Im konvektiven Zug (35) kühlen sich die Rauchgase an einem Schutzverdampfer (49), an Überhitzem (20), Verdampfern (21) und Economisern (22) auf 180 - 230 °C ab und verlassen den Kessel durch den Abgaskanal (23). Im Bereich (46) der Figur 6 bilden sich bisher in den Belägen auf katalytischem Weg neue Dioxine und Furane (De Novo Synthese).

In den Figuren 6 a-d ist die Einbaulage der erfindungsgemäßen Wärmeflussmessungen und die erfindungsgemäßen Vorgehensweisen eingetragen.

Fig. 6: Kesselkontur mit vollständiger Bestückung der Wärmeflusssensoren, die zur Ermittlung der in den Ansprüchen 4, 10, 11 und 12 genannten Differenztemperaturen und Temperaturprofile genutzt werden.

Fig. 6a: Ausschnitt aus Figur 6, Wärmeflussmessungen zur Bestimmung der Lage des Brennstoffes vor dem Zuteiler über Rostzone 31, gemäß Anspruch 6.

Fig. 6b: Ausschnitt aus Figur 6, Wärmeflussmessungen zur Bestimmung der Lage des Feuers in dem Verbrennungssystem, gemäß Anspruch 5.

Fig. 6c: Ausschnitt aus Figur 6, Warmeflussmessungen zur Bestimmung der Lage des Feuers in der Ausbrandzone, gemäß Anspruch 8.

Fig. 6d: Ausschnitt aus Figur 6, Wärmeflussmessungen zur Bestimmung des Zustandes der Feuerfestzustellung, gemäß Anspruch 9.

Die nachfolgenden Ausführungsbeispiele der Erfindung basieren auf einer typischen Rostverbrennungsanlage für Müll gemäß Fig. 6. Zur besseren Übersicht über die Vielfalt der Regelungsmöglichkeiten sind in der Tabelle 1 die zu verändernden Stellgrößen und Beeinllussungen über den Erfindungsmerkmalen aus den gemäß Ansprüchen 3 bis 12 erhaltenden Informationen aufgetragen.

| | | Wärmeflussmessung | Wärmewiderstand | Feuerlage auf dem Rost | Brennstoff vor Zuteiler | Thermik auf dem Rauchgasweg | Wärmeleistung Ausbrandzone | Zustand Feuerfestzustellung | Belagzustand | Trennerkennung | reproduzierbare Einstellung |
|---|---|---|---|---|---|---|---|---|---|---|---|
| Erfindungsmerkmal gemäß Anspruch | | 3 | 4 | 5 | 6 | 7 | 8 | 9 | 10 | 11 | 12 |
| Verfahren/Vorrichtung | | Verf. | Verf. | Verf. | Verf. | Verf. | Verf. | Verf. | Verf. | Verf. | Verf. |
| **Stellgröße / Beeinflussung** | | | | | | | | | | | |
| Leistung | Dampf | | | x | X | x | x | | x | x | x |
| | Müll | | | x | X | x | x | | x | x | x |
| Brennstoff | zuführen | | | x | X | x | x | | x | x | x |
| | zwischenlagern | | | x | X | x | x | | x | x | x |
| | trocknen | | | x | X | x | x | | x | x | x |
| | fördern | | | x | X | x | x | | x | x | x |
| | schüren | | | x | | x | x | | x | x | x |
| Luftverteilung | Primär/Sekundärluft | | | x | | x | x | | x | x | x |
| | Primärluft 5-fach | | | x | X | x | x | | x | x | x |
| | Temp. Primär-L. 5-fach | | | x | X | x | x | | x | x | x |
| | Sekundär-Luft 4-fach | | | x | | | x | | x | x | x |
| Laufzeit nach Reinigung | | x | x | | | | | | x | x | x |
| Müllqualität | | x | x | | | | | | x | x | x |
| Luftüberschuss | | x | x | | | | | | x | x | x |

Tab. 1: Zusammenhang zwischen Information aus Messungen der Differenztemperatur und den daraus folgenden Eingriffen zur Leistungsregelung des Heizkraftwerkes

Zur Regelung

Die wesentliche Regelung ist die Feuerungsleistungsregelung, die unterschiedliche Zielsetzungen hat. Gesetzlich vorgegeben ist ein sicherer Ausbrand der Schlacke und der Rauchgase bei Mindesttemperaturen und Mindestverweilzeiten. Zusätzlich gibt es intensive Bestrebungen, den Betrieb der Anlage trotz unterschiedlicher Zusammensetzungen des Brennstoffes möglichst gleichmäßig zu gestalten, wobei diese Zielsetzung den zuerst genannten gesetzlichen Anforderungen widersprechen kann. Man kann sich - vereinfacht ausgedrückt - für eine stabile Dampfleistung oder für eine stabile Verbrennungsleistung entscheiden. Bei der stabilen Dampfleistung ist der Dampf die wesentliche Führungsgröße, die über die Feuerungsleistungsregelung die Verbrennungsleistung regelt. Da die Information der Dampfmengenleistung deutlich verzögert gegenüber der tatsächlichen Verbrennungsleistung in die Feuerungsleistungsregelung eingeht, werden weitere Informationen aus dem Betrieb zur Verfügung gestellt. Bisher werden bevorzugt die Deckentemperaturmessung und der Sauerstoffgehalt im Rauchgas im Bereich des Economisers genutzt. Zukünftig können die Informationen der Wärmeflussmessungen vorteilhaft genutzt werden.

Wie bereits eingangs dargestellt, wird bei der alternativen Sauerstoffregelung die Sauerstoffzehrung (Produkt der Sauerstoffänderung und der zugeführten Luftmenge) und damit die chemische Verbrennungsleistung bei gleicher Luftmenge konstant gehalten.

Wichtig für die Durchführung des erfindungsgemäßen Verfahrens ist, dass genug brennfähiger Müll auf dem Rost liegt, damit im Bedarfsfall die Wärmeleistung durch Schüren schnell steigt. Durch die Warmeflussmessung entlang des Rostes (Anspruch 5) kann man erkennen, in welchen Rostbereichen noch Brennstoff liegt. In der Tabelle 1 wird deutlich, dass praktisch alle Stellgrößen benutzt werden können, um die Feuerungslage auf dem Rost in den geeigneten

7

Temperaturbereich zu bringen. Der Temperaturvergleich kann ergeben, dass die Leistung (Dampf oder Müll) verändert werden muss. Wurde zu wenig Brennstoff dosiert, kann der Regler das an den Wärmeflussmessungen, die im Bereich des Zuteilers installiert sind, erkennen (Anspruch 6). Hier sollte zunächst die Dosierleistung erhöht oder alternativ die Verbrennungsleistung verringert werden. Es kommen jedoch auch die weiteren in Tabelle 1 genannten Maßnahmen in Betracht. Wird beispielsweise weniger und kaltere Luft in diese Rostzone eingebracht, brennt der Müll dort weniger schnell ab.

Ist die Wärmeentbindung auf dem Ende des Rostes in der Ausbrandzone zu hoch, wird das mit den Wärmeflussmessungen, die im Anspruch 8 genannt werden, erkannt. In diesem Fall kommt für die Regelung jede Maßnahme in Betracht, von der Rücknahme der Leistung bis zur Steigerung der Luftvorwärmung. Die Entscheidung trifft das Regelprogramm je nach Vorgabe der Optimierungsbedingung.

Bezugszeichenliste zu Figur 1-5

| | |
|---|---|
| 1 | Feuerraum |
| 2 | Membranwand |
| 3 | Rohr |
| 4. | Steg |
| 5 | Isolation |
| 6 | Spezifischer Wärmefluss aus dem Feuerraum (1) |
| 7 | Kontaktpunkt Mitte Steg |
| 8 | Kontaktpunkt rauchgasabgewandter Rohrscheitel |
| 9 | Thermospannung |
| 10 a und b | Konstantandraht |
| 11 | Feuertestzustellung |
| 12 | Spezifischer Wärmeverlust durch Isolation (5) |
| 13 | Siedewasser |

Beschreibung zu Figur 6

(31) Feuerraum

(32) erster Strahlungszug

(33) zweiter Strahlungszug

(34) dritter Strahlungszug

(35) konvektiver Zug

(36) Zuteiler

(37) Zünddecke

(38) Ausbranddecke

(39) Seitenwände des Feuerraums

(40) Müllzufuhr

(41a-e) Verbrennungsrost Zone 1 - 5

(42) Schlackefallschacht

(43) Primärluft Zone 1- 5

(44) Sekundärluft Stirnseite unten (a), oben (c)

(44) Sekundärluft Ausbrandseite unten (b), oben (d)

(45) Feuerfestzustellung im ersten Zug

(46) Bereich für die de Novo Synthese

(47) austenitische Aufschweißung

(48) Eintritt in den ersten Zug

(49) Schutzverdampfer

(20) Überhitzer

(21) Verdampfer

(22) Economiser

(23) Abgaskanal

(24) Anfahr- und Stützbrenner

(25) Kesseldecktemperatur

* Wärmeflussmessung

**Patentansprüche**

1. Verfahren zur Auslegung und Prüfung eines auf einen Bereich von Wärmeübertragungsflächen bezogenen Wärmeflusses in Wandbereichen von Heizkraftwerken, bestehend aus Heizkesseln mit Feuerraum, Strahlungs- und Konvektionszügen sowie Membranwänden, wobei die Wärmeübertragungsflächen aus Rohren (3) für das zu beheizende Medium und aus Stegen (4) bestehen, die mit den Rohren (3) verschweißt sind zur Bildung einer durchgehenden, aus einem eisenhaltigen Grundmaterial bestehende Membranwand (2), **dadurch gekennzeichnet, dass** die Membranwände des Feuerraums und der Strahlungszüge mit mehreren Sensoren, bestehend aus mindestens zwei Kontaktstellen (7,8) zur Messung von Differenzspannungen nach der Methode der Thermoelementmessung und mit einem Anzeigegerät (9) zur Umwandlung der gemessenen Differenzspannungen in Wärmefluss- Einheiten versehen sind, dass jede der Kontaktstellen (7,8) auf dem durchgehend verbundenen eisenhaltigen Grundmaterial aufliegt und mit je einem Leiter aus dem gleichen Thermodrahtmaterial an das Anzeigegerät angeschlossen wird, wobei der eine Leiter in der Mitte des Steges und der andere Leiter am Rohrscheitel des nächsten oder benachbarten Rohres angebracht ist und mit dem Anzeigegerät verbunden ist und, dass aus den bei Betrieb des Heizkraftwerkes erhaltenen Messdaten über die Differenzspannung der Wärmefluss online bestimmt wird.

2. Verfahren nach Anspruch 1, **dadurch gekennzeichnet, dass** der Wärmefluss während des Betriebes des Heizkraftwerkes laufend bestimmt wird und daraus ein Wärmefluss-Profil ermittelt wird.

3. Verfahren zur Feuerleistungsregelung in Heizkraftwerken unter Anwendung eines Verfahrens nach Anspruch 2, **dadurch gekennzeichnet, dass** das im Betrieb ermittelte Wärmefluss-Profil mit einem Profil für die gleichmäßige Wärmeentbindung verglichen wird und daraus die Lage des Feuers in dem Verbrennungssystem und die Art und Größe für die Zuteilung des Brennstoffs auf dem Rost oder dem Brennstoffbett bestimmt wird.

4. Verfahren zur Bestimmung eines kritischen Belagszustandes von aus Membranwänden gebildeten Heizflächen des Feuerraums oder der Strahlungszüge eines Kraftwerks durch Differenztemperaturmessung, **dadurch gekennzeichnet, dass** im kritischen Bereich für Belagbildungen ein Thermodifferenzelement nach Anspruch 2 an der dem Rauchgas abgewandten Seite der Membranwand angebracht ist, wobei die eine Messstelle in der Mitte des Steges mit der Kontaktstelle (7) und die andere Messstelle auf dem rauchgasabgewandten Scheitel des Rohres mit der Kontaktstelle (8) angeschweißt wird und dass aus der laufenden Differenztemperaturmessung eine kritische Zustandsänderung des Membranwand-Belages festgestellt wird, sobald eine vorgegebene Temperaturdifferenz an der Membranwand nicht erreicht wird.

5. Wärmeflussmesseinrichtung für eine Wärmeübertragungsfläche einer Membranwand, insbesondere einer dem Feuerraum eines Heizkraftwerks nachgeschalteten Wärmeübertragungsfläche, wobei die Wärmeübertragungsfläche aus Rohren (3) für das zu beheizende Medium und aus Stegen (4) besteht, die mit den Rohren (3) verschweißt sind zur Bildung der durchgehenden, aus einem eisenhaltigen Grundmaterial bestehenden Membranwand (2), wobei die Wärmeflussmesseinrichtung aus mindestens zwei Kontaktstellen (7,8) zur Messung von Differenzspannungen nach der Methode der Thermoelementmessung und aus einem Anzeigegerät (9) zur Umwandlung der gemessenen Differenzspannung in Wärmefluss-Einheiten besteht, **dadurch gekennzeichnet, dass** die Wärmeflussmesseinrichtung als Thermodifferenzelement mit den Kontaktstellen (7,8) an der dem Rauchgas abgewandten Seite der Membranwand auf das Grundmaterial auflegbar ist dass jede Kontaktstelle mit je einem Leiter (10a oder 10b) aus dem gleichen Thermodrahtmaterial mit dem Anzeigegerät (9) verbunden ist, wobei der eine Leiter in der Mitte des Steges (4) und der andere Leiter am Rohrschcitel des nächsten oder benachbarten Rohres (3) angebracht ist.

6. Vorrichtung zur Durchführung einer Feuerleistungsregelung in Heizkraftwerken mit mehreren einem Feuerraum nachgeschalteten Wärmeübertragungsflächen, bestehend aus Rohren für das zu beheizende Medium und aus Stegen, die mit den Rohren verschweißt sind zur Bildung einer durchgehenden Membranwand, **dadurch gekennzeichnet, dass** die Vorrichtung aus einem mit Wärmeflussmesseinrichtungen nach Anspruch 5 versehenen Abschnitt der Membranwand besteht, wobei der eine Leiter (10a) in der Mitte des Steges (7) und der andere Leiter (10b) am Rohrscheitel des nächsten oder benachbarten Heizrohres (3) angebracht ist.

Claims

1. A method of designing and testing a heat flow in the wall regions of a combined heating and power station, which heat flow refers to a region of heat transfer surfaces, consisting of boilers with a combustion chamber, radiation and convection tracks as well as membrane walls, wherein the heat transfer surfaces consist of pipes (3) for the medium to be heated and of webs (4) which are welded to the pipes (3) for the purpose of forming a continuous membrane wall (2) consisting of an iron-containing base material,

   **characterised in**

   **that** the membrane walls of the combustion chamber and of the radiation tracks are provided with a plurality of sensors consisting of at least two contact points (7, 8) for measuring voltage differentials in accordance with the thermo element measurement method, and with an indicator (9) for converting the measured voltage differentials into heat flow units;

   **that** each contact point (7, 8) rests on the continuously connected iron-containing base material and is connected by a conductor consisting of the same thermo wire material to the indicator, wherein the one conductor is attached in the centre of the web and the other conductor at the pipe apex of the nearest or adjoining pipe and is connected to the indicator;

   and **that** the measured data obtained during the operation of the combined heating and power station are used to decide on the voltage differential of the heat flow online.

2. A method according to claim 1,

   **characterised in**

   **that** the heat flow is continuously determined during the operation of the combined heating and power station and used to determine a heat flow profile.

3. A method of controlling the fire output in combined heating and power stations by using a method according to claim 2,

   **characterised in**

   **that** the heat flow profile determined under operational conditions is compared with a profile for the uniform release of heat, thereby determining the position of the fire in the combustion system and the type and size of same for allocating the fuel on the grate or the fuel bed.

4. A method of determining a critical coating condition of combustion chamber heating surfaces formed by membrane walls or of the radiation tracks of a power station by measuring temperature differentials,

   **characterised in**

   **that** in the critical region for the formation of coatings, a thermo differential element according to claim 2 is attached on that side of the membrane wall which faces away from the flue gas, wherein the one measuring point is welded to the contact point (7) in the centre of the web and wherein the other measuring point is welded to the contact point (8) on the pipe apex facing away from the flue gas;

   and **that** the continuous temperature differential measurements are used to determine a critical change in the condition of the membrane wall coating as soon as a predetermined temperature differential at the membrane wall has not been reached.

5. A heat flow measuring device for a heat transfer surface of a membrane wall, more particularly of a heat transfer surface connected so as to follow the combustion chamber of a combined heating and power station, wherein the heat transfer surface consists of pipes (3) for the medium to be heated and of webs (4) which are welded to the pipes (3) in order to form the continuous membrane wall (2) consisting of an iron-containing base material;

   wherein the heat flow measuring device consists of at least two contact points (7, 8) for measuring voltage differentials in accordance with the thermo element measuring method and of an indicator (9) for converting the measured voltage differential into heat flow units,

   **characterised in**

   **that** the heat flow measuring device in the form of a thermo differential element with contact points (7, 8), on the side of the membrane wall facing away from the flue gas, can be placed on to the base material;

   **that** each contact point, by means of a conductor (10a or 10b) consisting of the same thermo wire material to the indicator (9), wherein the one conductor is attached in the centre of the web (4) and the other conductor at the pipe apex of the nearest or adjoining pipe (3).

6. A device for controlling the fire output in combined heating and power stations with a plurality of heat transfer surfaces connected so as to follow the combustion chamber, consisting of pipes for the medium to be heated and of webs which are welded to the pipes for the purpose of forming a continuous membrane wall,

**characterised in**

**that** the device consists of a portion of the membrane wall, which portion is provided with heat flow measuring devices according to claim 5, wherein the one conductor (10a) is attached in the centre of the web (7) and wherein the other conductor (10b) is attached at the pipe apex of the nearest of adjoining heating pipe (3).

## Revendications

1. Une méthode pour le dimensionnement et le contrôle du flux thermique sur les surfaces de transmission de la chaleur dans les sections des parois de centrales thermiques, comprenant une chaudière à foyer, des parcours de radiation et de convection, ainsi que des parois membranes, ces surfaces de transmission étant composées de conduits (3) pour le milieu à chauffer et de traverses (4) étant soudées aux conduits, afin de former une paroi membrane ininterrompue en matière de base ferreuse (2), étant **caractérisée par le fait que** les parois membranes du foyer et de la zone de radiation sont munies de plusieurs senseurs qui possèdent au moins deux points de contacts (7,8) aptes à mesurer les tensions différentielles, selon la méthode de mesure des thermocouples, et d'un appareil de visualisation (9) pour la conversion des tensions différentielles mesurées en unités de flux thermique, que chaque point de contact (7,8) est situé sur la matière de base ferreuse intégralement reliée et qu'il est connecté à l'appareil de visualisation, via un conducteur composé de la même matière que le conducteur thermique, l'un des conducteurs étant relié au milieu de la traverse et l'autre étant relié à la crête du conduit suivant ou du conduit voisin et étant connecté à l'appareil de visualisation, et que les données de mesure obtenues concernant la tension différentielle, en cours d'opération de la centrale thermique, permettent de déterminer le flux thermique en ligne.

2. Une méthode conformément à la revendication 1, **caractérisée par le fait que** le flux thermique est déterminé continuellement durant l'opération de la centrale thermique, ce qui permet d'obtenir un profil du flux thermique.

3. Méthode pour le réglage du rendement calorifique dans les centrales thermiques, à l'appui d'un procédé conformément à la revendication 2, **caractérisée par le fait que** le profil du flux thermique, déterminé durant l'opération de la centrale thermique, est comparé au profil requis pour une émission constante de la chaleur, ce qui permet d'évaluer la position du foyer dans le système de combustion, ainsi que le genre et la quantité de combustible qui devra être chargé sur la grille ou sur le banc à combustible.

4. Méthode pour déterminer l'état critique d'un dépôt sur les parois membranes formant les surfaces de transmission de la chaleur du foyer, ou sur les parcours de radiation dans une centrale thermique, en mesurant la température différentielle, **caractérisée par le fait que** dans la zone critique de formation de dépôt, un thermocouple conformément à la revendication 2, est installé sur la paroi membrane du coté étant détourné du gaz de combustion, le point de mesure qui est situé au milieu de la traverse étant soudé avec le point de contact (7) tandis que l'autre point de mesure, situé sur la crête du conduit qui est détourné du gaz de combustion, étant soudé avec le point de contact (8), et qu'en mesurant continuellement la température différentielle, un changement critique de l'état du dépôt sur la paroi membrane pourra être constaté, aussitôt que la différence de température prescrite ne sera pas atteinte sur ladite paroi membrane.

5. Dispositif de mesure du flux thermique sur la surface de transmission de la chaleur d'une paroi membrane, en particulier sur la surface de transmission de la chaleur étant installée en suite du foyer dans une centrale thermique, ladite surface de transmission étant formée de conduits (3) pour le milieu à chauffer et composée de traverses (4) soudées aux conduits (3) pour la formation d'une paroi membrane intégralement reliée et composée d'une matière de base ferreuse (2),
le dispositif de mesure du flux thermique étant composé au moins de deux points de contact (7,8) pour la mesure des tensions différentielles, selon la méthode de mesure des thermocouples, et d'un appareil de visualisation (9) pour la conversion de la tension différentielle mesurée, en unités de flux thermique, **caractérisé par le fait que** le dispositif de mesure du flux thermique est mis en contact comme thermocouple différentiel avec les points de contact (7,8) sur la matière de base du coté de la paroi de membrane qui est détourné du gaz de combustion, que chaque point de contact est relié avec un conducteur (10a ou 10b), composé de la même matière que le conducteur thermique, est connecté à l'appareil de visualisation (9), l'un des conducteur étant relié au milieu de la traverse (4) et l'autre conducteur étant relié à la crête du conduit suivant ou du conduit voisin (3).

6. Dispositif permettant le réglage de l'intensité calorifique des centrales thermiques à plusieurs surfaces de transmission de la chaleur intercalées à la suite d'un foyer, composées de conduits pour le milieu à chauffer et de traverses qui sont soudées aux conduits, afin de former une paroi membrane ininterrompue, **caractérisé par le fait que** le dispositif comprend une section de la paroi membrane munie d'éléments de mesure de flux thermique, conformément à la revendication 5, le conducteur (10a) étant relié au milieu de la traverse (7) et le conducteur (10b) étant relié à la crête du conduit suivant ou du conduit de chauffage voisin (3).

Fig. 1

Temperaturen in der Membranwand mit 30 mm SIC90 Masse und Isolation bei 50 kW/m² sowie 300 °C Siedewasser

**Fig. 2**

Temperaturen auf der Achse der Außenseite des Steges einer Membranwand in Abhängigkeit vom spezifischen Wärmefluss "q" und der Rohrteilung "T" bei 300 °C Siedewasser

Fig. 3

Fig. 4

Fig. 5

Fig. 6: Kesselkontur mit vollständiger Bestückung der Wärmeflussmessungen, die im Anspruch 4, 10, 11 und 12 genannt und genutzt werden.

**Fig.6a:** Ausschnitt aus Abbildung 6 Wärmeflussmessungen zur Bestimmung der Lage des Brennstoffes vor dem Zuteiler über Rostzone 1. Anspruch 6.

**Fig. 6b:** Ausschnitt aus Abbildung 6 Wärmeflussmessungen zur Bestimmung der Lage des Feuers in dem Verbrennungssystem, Anspruch 5.

Fig. 6c: Ausschnitt aus Abbildung 6 Wärmeflussmessungen zur Bestimmung der Lage des Feuers in der Ausbrandzone, Anspruch 8

Fig. 6d: Ausschnitt aus Abbildung 6 Wärmeflussmessungen zur Bestimmung des Zustandes der Feuerfestzustellung, Anspruch 9

Fig. 6e: Auschnitt aus Abbildung 6 Wärmeflussmessungen zur Bestimmung der Thermik in den Strahlungszügen, Anspruch 7

**EP 1 760 441 B1**

**In der Beschreibung aufgeführte Patentdokumente**

- WO 2004036116 A2
- US 6485174 A
- US 4779994 A